# EUROPÄISCHE PATENTSCHRIFT

(11) **EP 2 417 375 B1**
(45) Veröffentlichungstag und Bekanntmachung des Hinweises auf die Patenterteilung: **12.06.2013**
(21) Anmeldenummer: 10712337.4
(22) Anmeldetag: 26.03.2010
(51) Int. Cl.: F16D 65/12

(54) **SCHEIBENBREMSE**
BRAKE DISK
DISQUE DE FREIN

(30) Priorität: 09.04.2009 DE 102009017233; 09.04.2009 DE 102009017234
(43) Veröffentlichungstag der Anmeldung: 15.02.2012
(73) Patentinhaber: Bayerische Motoren Werke Aktiengesellschaft, 80809 München (DE)
(72) Erfinder: KOKOTT, Kordian, 80992 München (DE); KUHN, Ulrich, 80997 München (DE); NILLERT, Tabea, 15754 Heidesee (DE)
(86) Internationale Anmeldenummer: PCT/EP2010/001920
(87) Internationale Veröffentlichungsnummer: WO 2010/115527

(56) Entgegenhaltungen:
- DE-A1- 2 101 428
- DE-A1- 19 648 582
- DE-U1- 20 219 859
- FR-A1- 2 797 929
- US-A1- 2005 126 870

## Beschreibung

Die Erfindung betrifft eine Scheibenbremse für ein Kraftfahrzeug, nach dem Oberbegriff des ersten Anspruchs.

Der Aufbau eines konventionellen Rades und dessen Lagerung besteht aus den Bauteilen Radlager, Radnabe mit Radmontageflansch und Felge mit Reifen. Die Felge wird mit Radschrauben am Radmontageflansch befestigt, wobei die Bremsscheibe über einen Bremsscheibentopf zwischen Felge und Radmontageflansch geklemmt wird. Eine solche Radlageranordnung beschreibt die DE 101 32 429 A1. Der maximale Bremsscheiben-Reibradius wird hier von der Maßkette, innerer Felgenradius - Höhe der Bremssattelbrücke - halbe Belaghöhe, bestimmt. Bei leistungsstarken Fahrzeugen ist es daher oft erforderlich eine größere Felge einzusetzen um die notwendige Bremsscheibengröße unterzubringen. Eine Scheibenbremse gemäß dem Oberbegriff des Anspruchs 1 zeigt die Gebrauchsmusterschrift DE 202 19 859 U1. Hier sind Radlagerflansch und topfförmiger Teil der Bremsscheibe über Berührflächen, Aussparungen und Versteifungsbereiche so aufeinander abgestimmt, dass die Belastungen durch die Schraubenkräfte beim Befestigen der Felge nahezu keinen Einfluss auf den Planlauf der Bremsscheibe haben.

Des Weiteren sind bereits Verbundbremsscheiben bekannt, mit Reibringen aus Grauguss, verbunden mit einem Bremsscheibentopf aus Leichtmetall. Die DE 100 24 819 A1 beschreibt unter anderem sog. gebaute Bremsscheiben, bei denen Reibring und Topf über seperate Elemente, wie Stifte, Schrauben etc. zusammengefügt sind. Der Bremsscheibentopf weist dabei einen Boden und eine umlaufende Wand auf und ist aus einer Aluminiumlegierung gefertigt. Die FR 2 797 929 A1 beschreibt eine gebaute Bremsscheibe, bei der der Bremsscheibentopf Ausnehmungen besitzt und den innengekühlten Reibring über dessen Kühlrippen zentriert befestigt.

Der Aufbau eines Rades mit Doppelbremsscheibe und dessen Lagerung besteht aus den Bauteilen Radlager, Radnabe mit Radmontageflansch und Felge mit Reifen. Die Felge wird mit Radschrauben am Radmontageflansch befestigt, wobei die Doppelbremsscheibe über einen Bremsscheibentopf zwischen Felge und Radmontageflansch geklemmt wird. Eine solche Radlageranordnung beschreibt die DE 10 2006 052 177 A1.

Eine weitere Doppelbremsscheibe wird in der Offenlegungsschrift DE 1 800 549 beschrieben. Die Bremsscheiben sind hier direkt mit der Radnabe verbunden und zwischen den beiden Bremsscheiben entsteht ein nur gering durchlüfteter Bereich, was der Kühlung der Bremsscheiben, zum Beispiel bei einer Dauerbremsung nicht zuträglich ist.

Eine Ausführung einer Doppelbremsscheibe mit vorgesehener Kühlung beschreibt das Deutsche Gebrauchsmuster DE 87 02 630 U, wohl für eine Radbaugruppe mit Doppelscheibenbremse für Schienenfahrzeuge. Jede Bremsscheibe ist hier einstückig über achsparallele Arme 21 mit einem Befestigungsring 19 verbunden, der durch einen Tragring 13 zentriert auf der Achswelle gehalten wird. Zwischen den Armen 21 hindurch kann Luft in den Raum zwischen den Bremsscheiben einströmen. Bei dieser Ausführung ist die Bremsscheibe sehr kompliziert ausgeführt und sehr teuer herzustellen. Außerdem eignet sich die Konstruktion weniger für ein Kraftfahrzeug.

Aufgabe der vorliegenden Erfindung ist es, Radbaugruppen mit Einscheibenbremse oder Doppelscheibenbremse für ein Kraftfahrzeug bereitzustellen, die einen Bremsscheibentopf besitzen, der gewichtsparend gestaltet ist, die Kühlung der Bremsscheibe unterstützt und außerdem oben genannte Nachteile vermeidet.

Die Aufgabe wird erfindungsgemäß mit den kennzeichnenden Merkmalen des Anspruchs 1 gelöst. Weitere Ausgestaltungen der Erfindung ergeben sich aus den abhängigen Ansprüchen.

Nach der Erfindung ist eine Scheibenbremse mit einer Einrichtung zur zentrierten Befestigung mindestens einer Bremsscheibe und mit einer Einrichtung zur Kühlluftführung in radialer Richtung zur Bremsscheibe hin, insbesondere in den Raum zwischen zwei Bremsscheiben, wozu der Bremsscheibentopf an seinem Umfang Ausnehmungen besitzt, dadurch gekennzeichnet, dass die Bremsscheibe über von ihrem Innendurchmesser nach innen gerichtete, insbesondere sechs bis zehn, Zentrier- und/oder Befestigungsfortsätze, in axialer Richtung stirnseitig von einer Seite an den Bremsscheibentopf herangeführt und auf Zentrieransätze des Bremsscheibentopfs aufgesetzt, an diesem, mittels in axialer Richtung verlaufenden Befestigungsmitteln, insbesondere Schrauben und/oder Nieten, festgelegt ist.

Ein als Fachwerk gestalteter Bremsscheibentopf hat den Vorteil, dass Kühlluft, in radialer Richtung, aus dem Bremsscheibentopf heraus, an der Bremscheibe entlang fließen kann, was zu einer effektiven Kühlung der Bremsscheibe und des Bremssattels beiträgt. Außerdem ist der Bremsscheibentopf so leicht und filigran gestaltbar, was große Gewichtsvorteile mit sich bringt, ohne dass Abstriche in Bezug auf die Gestaltfestigkeit hinzunehmen sind. Besitzt der Bremsscheibentopf eine Einrichtung zur zentrierten, parallel beabstandeten Befestigung zweier Bremsscheiben, ist dem Durchströmen des Raumes zwischen den beiden Bremsscheiben mit Luft kaum Widerstand gesetzt, sondern dieses wird eher begünstigt, was zur hervorragenden Kühlung der Bremsscheiben und des Bremssattels beiträgt.

Sind Bremsscheibe und Bremsscheibentopf voneinander trennbare Teile, so ist die Fertigung jedes Teils einfach und preiswert. Außerdem ist ein Austausch der Bremsscheiben möglich, ohne die ganze Radbaugruppe demontieren zu müssen. Vorteilhaft ist dabei; wenn der Bremsscheibentopf die Bremsscheibe in radialer und axialer Richtung zentriert. Wird die Anbindung dabei in Richtung der Reibringe verlegt, statt auf dem Außendurchmesser des Bremsscheibentopfes in axialer Richtung angeordnet, kann dadurch noch mehr Gewicht eingespart werden.

Bei einer vorteilhaften Ausführung der Erfindung ist der Bremsscheibentopf dadurch gekennzeichnet, dass dieser sich, von der Bremsscheibe aus gesehen, im wesentlichen in eine Richtung erstreckt. Die Fachwerkrippen oder Stege können dabei senkrecht zum Innendurchmesser des Bremsscheibentopfes verlaufen oder angeschrägt sein.

Bei einer Ausführungsform mit zwei parallel beabstandeten Bremsscheiben erstreckt sich der Bremsscheibentopf im Wesentlichen zwischen den beiden Bremsscheiben.

Bei einer weiteren bevorzugten Ausführungsform der Erfindung besitzt der Bremsscheibentopf eine dessen Umfang und dessen Ausnehmungen bildende Zarge, die aus einem im wesentlichen V-förmig, insbesondere in Mäanderform, verlaufenden Profil gleichen oder unterschiedlichen Querschnitts besteht. Bei der Doppelbremsscheibe kann das Profil im Wesentlichen V-förmig von Bremsscheibe zu Bremsscheibe verlaufen. In beiden Fällen kann konstruktiv ein besonders leichter Bremsscheibentopf gestaltet werden, bei gleichzeitigem vorteilhaftern Spannungsverlauf im Profil der Zarge. Und das insbesondere, wenn sich das Zargenprofil, insbesondere in Mäanderform, von Bremsscheibe zu Bremsscheibe erstreckt. Des Weiteren können hier durch die Konstruktion gegenläufige Schwingungen zwischen den Reibringen der Bremsscheiben aufgenommen und ausgeglichen werden. Ganz allgemein wird der thermische Axialverzug, die Schirmung, dadurch vermindert, dass der Reibring fingerartig über die Befestigungsfortsätze angebunden ist und somit der Bremsscheibentopf Verformungen im Reibring aufnehmen und denen nachgeben kann. Auch eine preiswerte Herstellung, zum Beispiel im Druckgussverfahren ohne Hinterschnitte in der Form, wird ermöglicht.

Vorteilhafterweise kann das Zargenprofil mindestens durch eine, sich in radialer Richtung erstreckende, Topfscheibe versteift werden. Wobei dann das Zargenprofil und/oder die Topfscheibe aus einer Leichtmetalllegierung bestehen und beide vorteilhafterweise zusammen in einem Arbeitsgang gegossen werden können. Das Gewicht wird dadurch enorm reduziert im Vergleich zum Werkstoff Grauguss und außerdem zusätzlich durch die Leichtbauweise des Topfes im Vergleich zum Vollmanteltopf. Zur belastungsgerechten Gestaltung können Übergangsbereiche von Zarge zu Topfscheibe mindestens teilweise durch Materialanhäufung verstärkt sein.

Besonders einfach bei der Bremsscheibenmontage ist eine Ausführungsform der Erfindung, wenn an dem in axialer Richtung außen liegenden Zargenprofil, insbesondere an den Spitzen des V-Grunds, außenseitig, bei einer Bremsscheibe auf der einen Seite die Bremsscheibenzentriereinrichtung und/oder die Bremsscheibenbefestigungseinrichtung und auf der anderen Seite die Topfscheibe ausgebildet ist. Bei einer Doppelscheibe ist an dem in axialer Richtung außen liegenden Zargenprofil, insbesondere an den Spitzen des V-Grunds, außenseitig, die Bremsscheibenzentriereinrichtung und/oder die Bremsscheibenbefestigungseinrichtung ausgebildet.

Während eine weitere vorteilhafte Ausführungsform dadurch gekennzeichnet ist, dass die Rippen der Zarge im Bereich der Ausnehmungen ein Querschnittsprofil aufweisen, das dazu geeignet ist, durch seine Drehung Luft aus dem Bremsscheibentopf heraus in radialer Richtung nach außen durch die Ausnehmungen hindurch an der Bremsscheibe entlang oder in die Bremsscheibe oder zwischen die Bremsscheiben hinein zu fördern. So wird die Bremsscheibe, werden die Bremsscheiben aktiv mit Luft zur Kühlung versorgt, was diese besonders bei langsamer Bergabfahrt besser kühlt.

Besonders vorteilhaft wirkt sich die Gestaltung auf die Luftförderung aus, wenn die Rippen der Zarge im Bereich der Ausnehmungen ein Querschnittsprofil aufweisen, das einen spitzen Winkel besitzt, dessen Scheitelpunkt, in Drehrichtung des Bremsscheibentopfes gesehen, aufgrund der an den Querschnittsecken verwendeten Radien, vor dem Querschnittsprofil, insbesondere auf einer Tangente an den Bremsscheibentopf-Innendurchmesser, liegt und dessen Schenkel, vom Scheitelpunkt aus gesehen, von der Drehrichtung des Bremsscheibentopfes weggerichtet verlaufen. Wenn das Querschnittsprofil der Rippen im wesentlichen einem Parallelogramm entspricht, mit in Drehrichtung des Bremsscheibentopfes vorne, insbesondere im wesentlichen auf dem Innendurchmesser des Bremsscheibentopfes, liegendem Scheitelpunkt seines unteren spitzen Eckwinkels, ist die Gestaltung gießtechnisch einfach auszuführen. Dazu ist es noch notwendig, dass die Rippen der Zarge im Bereich der Ausnehmungen ein Querschnittsprofil aufweisen, das abgerundete Ecken, insbesondere ausgebildet als Gußradien, besitzt.

Im Folgenden wird die Erfindung anhand zweier Ausführungsbeispiele weiter erläutert. Erfindungswesentlich können sämtliche näher beschriebenen Merkmale sein. Es zeigen:
- Fig. 1:: einen erfindungsgemäßen Bremsscheibentopf einer Ausführung mit einer Einzelbremsscheibe in räumlicher Darstellung,
- Fig.2:: den erfindungsgemäßen Bremsscheibentopf aus Figur 1 mit demontierter Bremsscheibe in 2 Ansichten in räumlicher Darstellung und
- Fig. 3:: einen Teilquerschnitt durch die Zarge im Bereich einzelner Rippen des Bremsscheibentopfes zur Darstellung der Kühlluftströmung.
- Fig. 4:: einen erfindungsgemäßen Bremsscheibentopf einer Ausführung mit einer Doppelbremsscheibe in räumlicher Darstellung und
- Fig.5:: den erfindungsgemäßen Bremsscheibentopf aus Figur 4 mit demontierten Bremsscheiben.

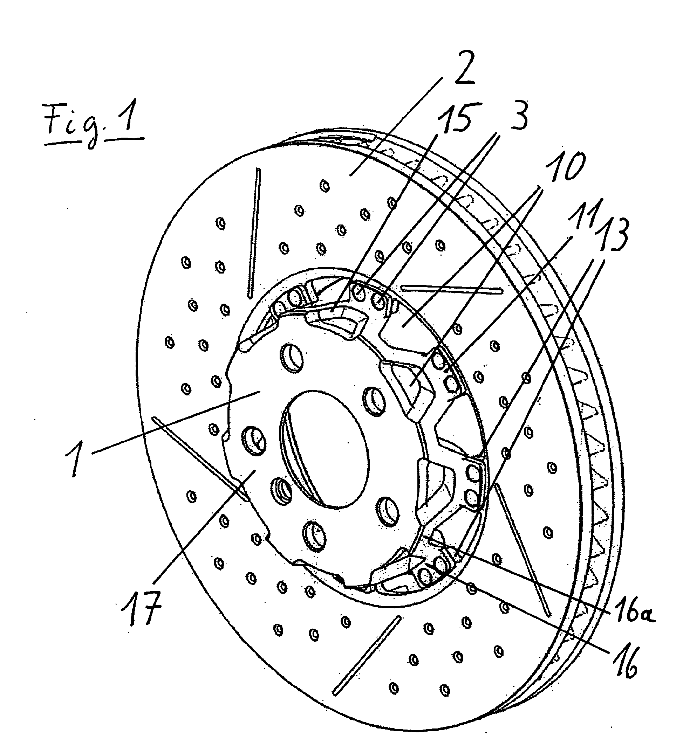

Der in Figur 1 dargestellte Bremsscheibentopf 1 ist einer nicht gezeichneten, um eine mittig verlaufende, nicht gezeichnete Achse drehantreibbaren Radnabe zugeordnet. Er ist in Anlehnung an ein Fachwerk gestaltet. Die Form dient vorrangig der Belüftung einer Bremsscheibe 2 und eines nicht gezeichneten Bremssattels mittels Durchströmung des Raums seitlich der stimseitig an dem Bremsscheibentopf 1 befestigten Bremsscheibe 2 oder mittels Durchströmung des Raums in der Bremsscheibe 2. Dadurch soll ausreichend sichergestellt sein, die Temperaturen im Bereich der Bremsscheibe 2 möglichst gering zu halten und insbesondere den nicht gezeichneten Bremssattel zu kühlen.

Die Ausnehmungen 10 im Bremsscheibentopf 1 und die Verbindungsgeometrien zu der Bremsscheibe 2 sind derart gestaltet, dass keinerlei Hinterschnitte vorhanden sind und somit der Bremsscheibentopf 1 einfach durch zwei entsprechende Formhälften gießtechnisch hergestellt werden kann. Außerdem sind die spannungskritischen Ecken so geformt, dass die durch die Belastung durch das Bremsmoment auftretenden Spannungen im Werkstoff weitestgehend minimiert sind. Des Weiteren zeichnet sich diese Leichtbaukonstruktion durch Gestaltfestigkeit, bedingt durch die Fachwerkkonstruktion in Skelettbauweise, und durch eine enorme Gewichtsreduktion von rund 50% im Vergleich zu einem üblichen Vollmanteltopf aus, was zudem Materialkosten spart.

Die Anbindung der Bremsscheibe 2 ist durch Nieten 3 realisiert, sie kann aber auch durch eine Verschraubung oder formschlüssige Verbindungen gestaltet werden.

Die Bremsscheibe 2 wird über acht von ihrem Innendurchmesser nach innen gerichtete Zentrier- und Befestigungsfortsätze 13, in axialer Richtung, stimseitig von einer Seite an den Bremsscheibentopf 1 herangeführt und auf die Zentrieransätze 11 des Bremsscheibentopfs 1 aufgesetzt, an diesem, mittels in axialer Richtung verlaufenden Nieten 3 befestigt. Der Bremsscheibentopf 1 zentriert die Bremsscheibe 2 in radialer und axialer Richtung.

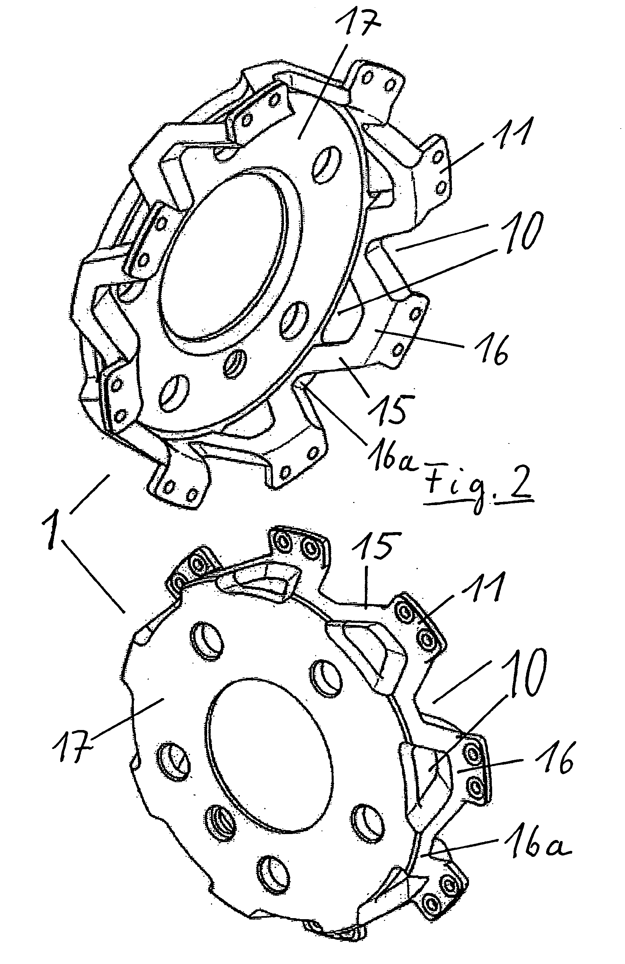

Die Figur 2 zeigt den Bremsscheibentopf 1 für eine Einzel-Scheibenbremse in zwei räumlichen Ansichten mit der Einrichtung zur Kühlluftführung in radialer Richtung an der Bremsscheibe 2 (Figur 1) entlang. Dazu besitzt der Bremsscheibentopf 1 eine dessen Umfang und dessen Ausnehmungen 10 bildende Zarge 15, die aus einem im wesentlichen V-förmig verlaufenden Profil unterschiedlichen Querschnitts besteht. Das V-förmige Profil der Zarge 15 erstreckt sich von der Bremsscheibe 2 axial in einer Richtung in Mäanderform und ist durch eine, sich in radialer Richtung erstreckende, Topfscheibe 17 versteift. An dem in axialer Richtung außen liegenden Profil der Zarge 15, an den Spitzen 16 des V-Grunds einer Seite, ist außenseitig die Bremsscheibenzentrier- und -befestigungseinrichtung ausgebildet. An den Spitzen des V-Grunds 16a der anderen Seite liegt die Topfscheibe 17. Das Profil der Zarge 15 und die Topfscheibe 17 sind aus einer Leichtmetalllegierung im Druckgussverfahren hergestellt. Dabei können die Übergangsbereiche von Zarge 15 zu Topfscheibe 17 auch durch Materialanhäufung verstärkt sein.

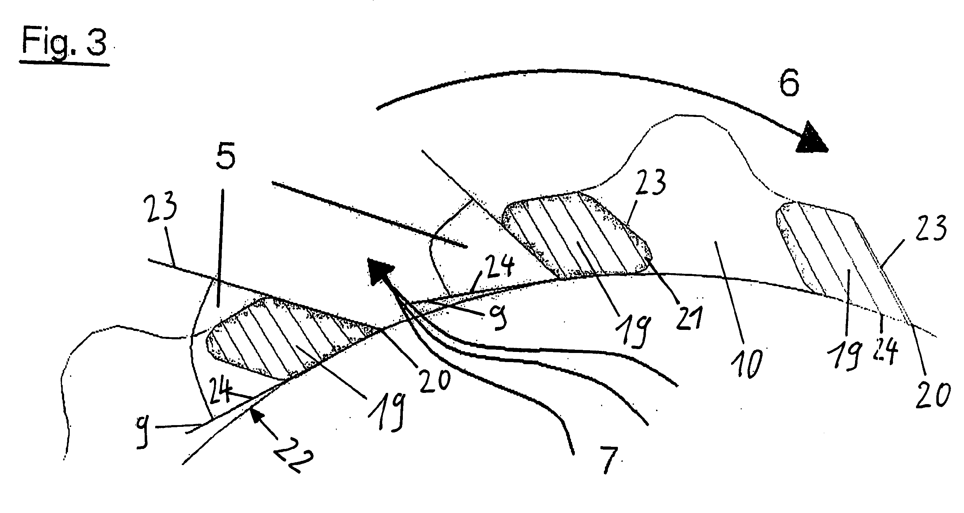

Die Einrichtung zur Kühlluftführung an der Zarge 15 wird durch deren Querschnittsprofil verwirklicht. Wie Figur 3 zeigt, weisen dazu die Rippen 19 der Zarge 15 im Bereich der Ausnehmungen 10 ein Querschnittsprofil auf, das geeignet ist, durch seine Drehung (Drehrichtung 6) Luft aus dem Bremsscheibentopf 1 heraus in radialer Richtung nach außen (Strömungspfeile 7) durch die Ausnehmungen 10 hindurch entlang der und in die Bremsscheibe 2 (Figur 1) hinein zu fördern. Das Querschnittsprofil besitzt einen spitzen Winkel 5, dessen Scheitelpunkt 20, in Drehrichtung 6 des Bremsscheibentopfes 1 gesehen, aufgrund der an den Querschnittsecken verwendeten Radien 21, vor dem Querschnittsprofil auf einer Tangente 9 an den Bremsscheibentopf-Innendurchmesser, Pfeil 22, liegt und dessen Schenkel 23, 24, vom Scheitelpunkt 20 aus gesehen, entgegengesetzt zur Drehrichtung 6 des Bremsscheibentopfes 1 verlaufen. Die Rippen 19 der Zarge 15 weisen im Bereich der Ausnehmungen 10 so ein Querschnittsprofil auf, das im wesentlichen einem Parallelogramm entspricht, mit in Drehrichtung 6 des Bremsscheibentopfes 1 vorne, im wesentlichen auf dem Innendurchmesser, Pfeil 22, des Bremsscheibentopfes 1, liegendem Scheitelpunkt 20 seines unteren spitzen Eckwinkels 5.

Die Rippen 19 sind in einem Winkel 5 von ca. 45° zur Tangente an den inneren Bremsscheibentopfdurchmesser, Pfeil 22, angeschrägt. Dadurch wird das Einströmen der Kühlluft, Pfeile 7, von der Bremsscheibentopfinnenseite bei der Drehrichtung (Pfeil 6), die dem vorwärts Fahren entspricht, begünstigt.

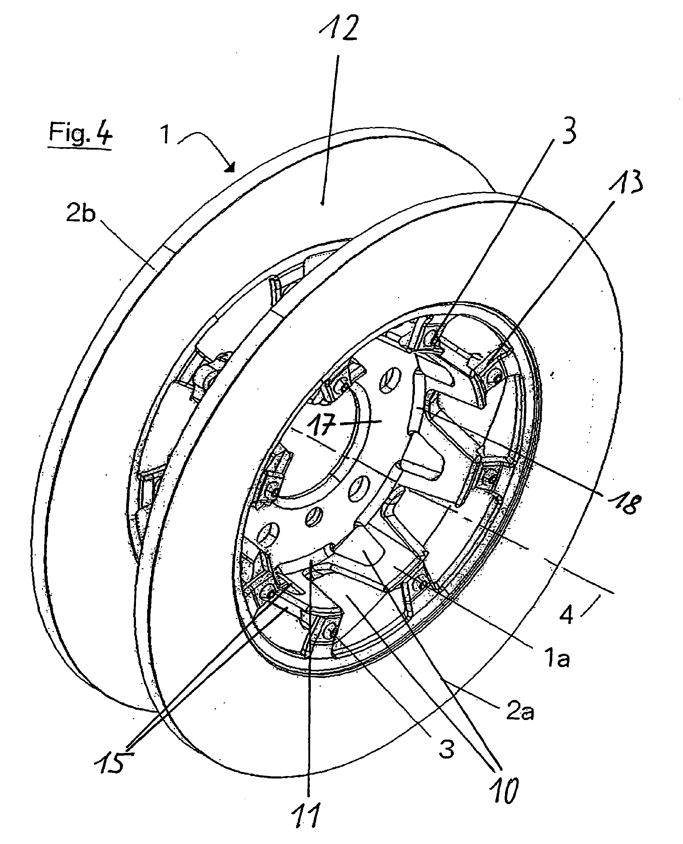

Der in Figur 4 dargestellte Bremsscheibentopf 1a ist einer nicht gezeichneten, um eine gestrichelt gezeichnete Achse 4 drehantreibbaren Radnabe zugeordnet. Er ist in Anlehnung an ein Fachwerk gestaltet. Die Form dient vorrangig der Belüftung, das heißt, die Durchströmung des Raums 12 zwischen zwei jeweils stimseitig an dem Bremsscheibentopf 1a befestigten Bremsscheiben 2a, 2b soll dadurch ausreichend sichergestellt sein, um die Temperaturen im Bereich zwischen den Bremsscheiben 2a, 2b möglichst gering zu halten und insbesondere den nicht gezeichneten Bremssattel zu kühlen.

Die Ausnehmungen 10 im Bremsscheibentopf 1a und die Verbindungsgeometrien zu den Bremsscheiben 2a, 2b sind derart gestaltet, dass keinerlei Hinterschnitte vorhanden sind und somit der Bremsscheibentopf 1a einfach durch zwei entsprechende Formhälften gießtechnisch hergestellt werden kann. Außerdem sind die spannungskritischen Ecken 11 so geformt, dass die durch die Belastung durch das Bremsmoment auftretenden Spannungen im Werkstoff weitestgehend minimiert sind. Dadurch kann diese Konstruktion auch gegenläufige Schwingungen zwischen den Bremsscheiben 2a, 2b ausgleichen. Des Weiteren zeichnet sich diese Leichtbaukonstruktion durch Gestaltfestigkeit, bedingt durch die Fachwerkkonstruktion in Skelettbauweise, und durch eine enorme Gewichtsreduktion von rund 50% im Vergleich zu einem üblichen Vollmanteltopf aus, was zudem Materialkosten spart.

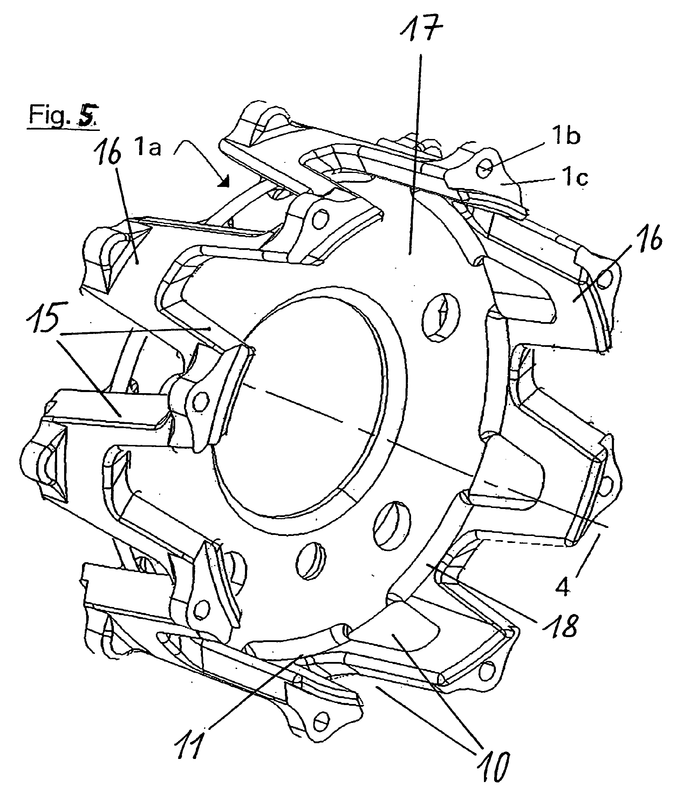

Die Anbindung der Bremsscheiben 2a, 2b ist durch eine Verschraubung 3 realisiert, sie kann aber auch durch Vernieten oder formschlüssige Verbindungen gestaltet werden. Dabei bedürfen ausschließlich die Gewindebohrungen 1b (Figur 5) im Bremsscheibentopf 1a mechanischer Nachbearbeitung.

Die Bremsscheiben 2a, 2b werden über acht von ihrem Innendurchmesser nach innen gerichtete Zentrier- und Befestigungsfortsätze 13, in axialer Richtung, stimseitig von jeder Seite an den Bremsscheibentopf 1a herangeführt und auf die Zentrieransätze 1c des Bremsscheibentopfs 1a aufgesetzt, an diesem, mittels in axialer Richtung verlaufenden Schrauben 3 befestigt. Der Bremsscheibentopf 1a zentriert die Bremsscheiben 2a, 2b in radialer und axialer Richtung.

Die Figur 5 zeigt den Bremsscheibentopf 1 a für eine Doppelscheibenbremse mit der Einrichtung zur zentrierten, parallel beabstandeten Befestigung der beiden Bremsscheiben 2a, 2b und mit der Einrichtung zur Kühlluftführung in radialer Richtung in den Raum 12 zwischen die beiden Bremsscheiben 2a, 2b (Figur 4). Dazu besitzt der Bremsscheibentopf 1a eine dessen Umfang und dessen Ausnehmungen 10 bildende Zarge 15, die aus einem im wesentlichen V-förmig verlaufenden Profil unterschiedlichen Querschnitts besteht. Das V-förmige Profil der Zarge 15 erstreckt sich von Bremsscheibe 2a zu Bremsscheibe 2b in Mäanderform zu jeder Bremsscheibe 2a, 2b hin und ist durch eine, sich in radialer Richtung erstreckende, Topfscheibe 17 versteift. An dem in axialer Richtung außen liegenden Zargenprofil, auf jeder Seite an den Spitzen 16 des V-Grunds, ist außenseitig die Bremsscheibenzentrier- und -befestigungseinrichtung ausgebildet. Die Zarge 15 und die Topfscheibe 17 sind aus einer Leichtmetalllegierung im Druckgussverfahren hergestellt. Dabei sind die Übergangsbereiche von Zarge 15 zu Topfscheibe 17 durch Materialanhäufung 18 verstärkt.

Die Einrichtung zur Kühlluftführung an der Zarge 15 wird durch deren Querschnittsprofil verwirklicht. Wie Figur 3 zeigt, weisen dazu die Rippen 19 der Zarge 15 im Bereich der Ausnehmungen 10 ein Querschnittsprofil auf, das geeignet ist, durch seine Drehung (Drehrichtung 6) Luft aus dem Bremsscheibentopf 1a heraus in radialer Richtung nach außen (Strömungspfeile 7) durch die Ausnehmungen 10 hindurch zwischen die Bremsscheiben 2a, 2b (Figur 4) hinein zu fördern. Das Querschnittsprofil besitzt einen spitzen Winkel 5, dessen Scheitelpunkt 20, in Drehrichtung 6 des Bremsscheibentopfes 1 a gesehen, aufgrund der an den Querschnittsecken verwendeten Radien 21, vor dem Querschnittsprofil auf einer Tangente 9 an den Bremsscheibentopf-Innendurchmesser, Pfeil 22, liegt und dessen Schenkel 23, 24, vom Scheitelpunkt 20 aus gesehen, entgegengesetzt zur Drehrichtung 6 des Bremsscheibentopfes 1a verlaufen. Die Rippen 19 der Zarge 15 weisen im Bereich der Ausnehmungen 10 ein Querschnittsprofil auf, das im wesentlichen einem Parallelogramm entspricht, mit in Drehrichtung 6 des Bremsscheibentopfes 1a vorne, im wesentlichen auf dem Innendurchmesser (Pfeil 22) des Bremsscheibentopfes 1a, liegendem Scheitelpunkt 20 seines unteren spitzen Eckwinkels 5.

Die Rippen 19 sind in einem Winkel 5 von ca. 45° zur Tangente an den inneren Bremsscheibentopfdurchmesser (Pfeil 22) angeschrägt. Dadurch wird das Einströmen der Kühlluft (Pfeile 7) von der Bremsscheibentopfinnenseite bei der Drehrichtung (Pfeil 6), die dem vorwärts Fahren entspricht, begünstigt.

## Patentansprüche

1. Scheibenbremse mit einem Bremsscheibentopf (1, 1a) und mit einer Einrichtung zur zentrierten Befestigung mindestens einer Bremsscheibe (2, 2a, 2b) und mit einer Einrichtung zur Kühlluftführung in radialer Richtung zur Bremsscheibe (2, 2a, 2b) hin, wozu der Bremsscheibentopf (1,1a) an seinem Umfang Ausnehmungen (10) besitzt, **dadurch gekennzeichnet, dass** die Bremsscheibe (2, 2a, 2b) über von ihrem Innendurchmesser nach innen gerichtete, insbesondere sechs bis zehn, Zentrier- und/oder Befestigungsfortsätze (13), in axialer Richtung stirnseitig von einer Seite an den Bremsscheibentopf (1, 1a) herangeführt und auf Zentrieransätze (11, 1c) des Bremsscheibentopfs (1, 1 a) aufgesetzt, an diesem, mittels in axialer Richtung verlaufenden Befestigungsmitteln, insbesondere Schrauben und/oder Nieten (3), festgelegt ist.

2. Scheibenbremse nach Anspruch 1, **dadurch gekennzeichnet, dass** der Bremsscheibentopf (1, 1a) sich, von der Bremsscheibe (2) aus gesehen, im wesentlichen in eine Richtung erstreckt.

3. Scheibenbremse nach Anspruch 1, **dadurch gekennzeichnet, dass** der Bremsscheibentopf (1, 1a) sich bei einer Scheibenbremse mit zwei parallel beabstandeten Bremsscheiben (2a, 2b) im wesentlichen zwischen diesen erstreckt und die Einrichtung zur Kühlluftführung diese in den Raum (12) zwischen die beiden Bremsscheiben (2a, 2b) leitet.

4. Scheibenbremse nach einem der Ansprüche 1 bis 3, **dadurch gekennzeichnet, dass** der Bremsscheibentopf (1, 1a) die Bremsscheibe (2, 2a, 2b) in radialer und axialer Richtung zentriert.

5. Scheibenbremse nach einem der Ansprüche 1 bis 4, **dadurch gekennzeichnet, dass** der Bremsscheibentopf (1, 1a) eine dessen Umfang und dessen Ausnehmungen (10) bildende Zarge (15) besitzt, die aus einem im wesentlichen V-förmig, insbesondere in Mäanderform, insbesondere von Bremsscheibe (2a) zu Bremsscheibe (2b), verlaufenden Profil gleichen oder unterschiedlichen Querschnitts besteht.

6. Scheibenbremse nach einem der Ansprüche 1 bis 5, **dadurch gekennzeichnet, dass** das Profil der Zarge (15) mindestens durch eine, sich in radialer Richtung erstreckende, Topfscheibe (17) versteift ist.

7. Scheibenbremse nach einem der Ansprüche 1 bis 6, **dadurch gekennzeichnet, dass** an dem in axialer Richtung außen liegenden Zargenprofil, insbesondere an den Spitzen (16, 16a) des V-Grunds, außenseitig, auf der einen Seite die Bremsscheibenzentriereinrichtung und/oder die Bremsscheibenbefestigungseinrichtung und auf der anderen Seite die Topfscheibe (17) ausgebildet ist.

8. Scheibenbremse nach einem der Ansprüche 1 bis 6, **dadurch gekennzeichnet, dass** an dem in axialer Richtung außen liegenden Profil der Zarge (15), insbesondere an den Spitzen des V-Grunds (16) außenseitig, die Bremsscheibenzentriereinrichtung und/oder die Bremsscheibenbefestigungseinrichtung ausgebildet ist.

9. Scheibenbremse nach einem der Ansprüche 1 bis 8, **dadurch gekennzeichnet, dass** die Zarge (15) und/oder die Topfscheibe (17) aus einer Leichtmetalllegierung bestehen.

10. Scheibenbremse nach einem der Ansprüche 1 bis 9, **dadurch gekennzeichnet, dass** die Zarge (15) und/oder die Topfscheibe (17) durch Gießen hergestellt sind.

11. Scheibenbremse nach einem der Ansprüche 1 bis 10, **dadurch gekennzeichnet, dass** Übergangsbereiche von Zarge (15) zu Topfscheibe (17) mindestens teilweise durch Materialanhäufung verstärkt sind.

12. Scheibenbremse nach einem der Ansprüche 1 bis 11, **dadurch gekennzeichnet, dass** die Rippen (19) der Zarge (15) im Bereich der Ausnehmungen (10) ein Querschnittsprofil aufweisen, das dazu geeignet ist, durch seine Drehung Luft aus dem Bremsscheibentopf (1, 1 a) heraus in radialer Richtung nach außen durch die Ausnehmungen (10) hindurch an der Bremsscheibe (2) entlang oder in die Bremsscheibe (2) hinein oder zwischen die Bremsscheiben (2a, 2b) hinein zu fördern.

13. Scheibenbremse nach einem der Ansprüche 1 bis 12, **dadurch gekennzeichnet, dass** die Rippen (19) der Zarge (15) im Bereich der Ausnehmungen (10) ein Querschnittsprofil aufweisen, das einen spitzen Winkel (5) besitzt, dessen Scheitelpunkt (20), in Drehrichtung (6) des Bremsscheibentopfes (1,1a) gesehen, aufgrund der an den Querschnittsecken verwendeten Radien (21), vor dem Querschnittsprofil, insbesondere auf einer Tangente (9) an den Bremsscheibentopf-Innendurchmesser (Pfeil 22), liegt und dessen Schenkel (23, 24), vom Scheitelpunkt (20) aus gesehen, von der Drehrichtung (6) des Bremsscheibentopfes (1, 1a) weggerichtet verlaufen.

14. Scheibenbremse nach einem der Ansprüche 1 bis 13, **dadurch gekennzeichnet, dass** die Rippen (19) der Zarge (15) im Bereich der Ausnehmungen (10) ein Querschnittsprofil aufweisen, das im wesentlichen einem Parallelogramm entspricht, mit in Drehrichtung (6) des Bremsscheibentopfes (1, 1 a) vorne, insbesondere im wesentlichen auf dem Innendurchmesser (Pfeil 22) des Bremsscheibentopfes (1, 1a), liegendem Scheitelpunkt (20) seines unteren spitzen Eckwinkels (5).

15. Scheibenbremse nach einem der Ansprüche 1 bis 14, **dadurch gekennzeichnet, dass** die Rippen (19) der Zarge (15) im Bereich der Ausnehmungen (10) ein Querschnittsprofil aufweisen, das abgerundete Ecken, insbesondere ausgebildet als Gußradien (21), besitzt.

## Claims

1. A disc brake with a brake disc pot (1, 1 a) with a device for centred fastening of at least one brake disc (2, 2a, 2b) and with a device to guide cool air in the radial direction toward the brake disc (2, 2a, 2b), for which the brake disc pot (1, 1 a) has recesses (10) on its periphery, **characterised in that** the brake disc (2, 2a, 2b) is guided by means of, more especially, six to ten centring and/or fastening projections (13) directed inwardly from its internal diameter, in the axial direction on the end face from one side to the brake disc pot (1, 1 a) and placed on centring attachments (11, 1c) of the brake disc pot (1, 1 a), and fastened to the latter by fastening means running in the axial direction, more especially screws and/or rivets (3).

2. A disc brake according to claim 1, **characterised in that** the brake disc pot (1, 1a), viewed from the brake disc (2), substantially extends in one direction.

3. A disc brake according to claim 1, **characterised in that** the brake disc pot (1, 1a), in a disc brake with two parallel spaced apart brake discs (2a, 2b), substantially extends between the latter, and the device to guide the cool air guides the latter into the space (12) between the two brake discs (2a, 2b).

4. A disc brake according to any one of claims 1 to 3, **characterised in that** the brake disc pot (1, 1a) centres the brake disc (2, 2a, 2b) in the radial and axial direction.

5. A disc brake according to any one of claims 1 to 4, **characterised in that** the brake disc pot (1, 1a) has a frame (15), which forms its periphery and its recesses (10) and comprises a substantially V-shaped profile running, more especially, in a meandering shape, more especially from the brake disc (2a) to the brake disc (2b), having the same or a different cross section.

6. A disc brake according to any one of claims 1 to 5, **characterised in that** the profile of the frame (15) is reinforced at least by one pot disc (17) extending in the radial direction.

7. A disc brake according to any one of claims 1 to 6, **characterised in that** the brake disc centring device and/or the brake disc fastening device is configured on the outside on the frame profile located on the outside in the axial direction, more especially on the tips (16, 16a) of the V-base, on one side, and the pot disc (17) is configured on the other side.

8. A disc brake according to any one of claims 1 to 6, **characterised in that** the brake disc centring device and/or the brake disc fastening device is configured on the outside on the profile of the frame (15) located on the outside in the axial direction, more especially on the tips of the V-base (16).

9. A disc brake according to any one of claims 1 to 8, **characterised in that** the frame (15) and/or the pot disc (17) comprise a light metal alloy.

10. A disc brake according to any one of claims 1 to 9, **characterised in that** the frame (15) and/or the pot disc (17) are produced by casting.

11. A disc brake according to any one of claims 1 to 10, **characterised in that** the transition regions from the frame (15) to the pot disc (17) are at least partially reinforced by an accumulation of material.

12. A disc brake according to any one of claims 1 to 11, **characterised in that** the ribs (19) of the frame (15), in the region of the recesses (10), have a cross sectional profile, which is suitable, by its rotation, to convey air from the brake disc pot (1, 1a), outwardly in the radial direction through the recesses (10) along the brake disc (2) or into the brake disc (2) or between the brake discs (2a, 2b).

13. A disc brake according to any one of claims 1 to 12, **characterised in that** the ribs (19) of the frame (15), in the region of the recesses (10), have a cross sectional profile, which has an acute angle (5), the vertex (20) of which, when viewed in the rotational direction (6) of the brake disc pot (1, 1 a), because of the radii (21) used at the cross sectional corners, is located before the cross sectional profile, more especially on a tangent (9) on the brake disc pot internal diameter (arrow 22), and the legs (23, 24) of which, viewed from the vertex (20), extend in the direction away from the rotational direction (6) of the brake disc pot (1, 1a).

14. A disc brake according to any one of claims 1 to 13, **characterised in that** the ribs (19) of the frame (15), in the region of the recesses (10), have a cross sectional profile, which, substantially corresponds to a parallelogram with the vertex (20) of its lower acute corner angle (5) located at the front in the rotational direction (6) of the brake disc pot (1, 1a), more especially substantially on the internal diameter (arrow 22) of the brake disc pot (1, 1a).

15. A disc brake according to any one of claims 1 to 14, **characterised in that** the ribs (19) of the frame (15), in the region of the recesses (10), have a cross sectional profile, which has rounded corners, more especially configured as casting radii (21).

## Revendications

1. Frein à disque comportant une coupelle de disque de frein (1, 1a) et un dispositif permettant la fixation centrée d'au moins un disque de frein (2, 2a, 2b) ainsi qu'un dispositif permettant de guider l'air de refroidissement en direction radiale vers le disque de frein (2, 2a, 2b), la coupelle de disque de frein (1, 1a) étant à cet effet équipée d'évidements (10) sur sa périphérie,
**caractérisé en ce que**
le disque de frein (2, 2a, 2b) est positionné frontalement en direction axiale sur la coupelle de disque de frein (1, 1a) par l'une de ses faces au moyen de prolongements de centrage et/ou de fixation (13) en particulier en nombre de six à dix dirigés vers l'intérieur à partir de son diamètre interne et, est appliqué sur des tétons de centrage (11, 1c) de la coupelle de disque de frein (1, 1a) sur laquelle il est fixé au moyen d'organes de fixation en particulier de vis ou de rivets (3) dirigés en direction axiale.

2. Frein à disque conforme à la revendication 1,
**caractérisé en ce que**
la coupelle de disque de frein (1, 1a) s'étend, à partir du disque de frein (2) dans essentiellement une direction.

3. Frein à disque conforme à la revendication 1,
**caractérisé en ce que**
dans le cas d'un frein à disque comportant deux disques de frein (2a, 2b) situés parallèlement à distance l'un de l'autre, la coupelle de disque de frein (1, 1a) s'étend essentiellement entre ces disques de frein, et le dispositif de guidage de l'air de refroidissement dirige cet air dans l'espace (12) situé entre les deux disques de frein (2a, 2b).

4. Frein à disque conforme à l'une des revendications 1 à 3,
**caractérisé en ce que**
la coupelle de disque de frein (1, 1a) permet de centrer le disque de frein (2, 2a, 2b) en direction radiale et en direction axiale.

5. Frein à disque conforme à l'une des revendications 1 à 4,
**caractérisé en ce que**
la coupelle de disque de frein (1, 1a) est équipée d'un encadrement (15) formant sa périphérie et ses évidements (10) et qui est constitué d'un profil ayant une même ou différentes sections s'étendant essentiellement en forme de V en particulier en forme de méandres en particulier d'un disque de frein (2a) à un disque de frein (2b).

6. Frein à disque conforme à l'une des revendications 1 à 5,
**caractérisé en ce que**
le profil de l'encadrement (15) est rigidifié au moins par un disque de coupelle (17) s'étendant en direction radiale.

7. Frein à disque conforme à l'une des revendications 1 à 6,
**caractérisé en ce que**
le profil de l'encadrement situé à l'extérieur en direction axiale, en particulier les pointes (16, 16a) de la base en V porte, extérieurement, sur l'une de ses faces le dispositif de centrage du disque de frein et/ou le dispositif de fixation du disque de frein et sur son autre face du disque de coupelle (17).

8. Frein à disque conforme à l'une des revendications 1 à 6,
**caractérisé en ce que**
le profil de l'encadrement (15) situé à l'extérieur en direction axiale, en particulier les pointes de la base en V (16), porte extérieurement le dispositif de centrage du disque de frein et/ou le dispositif de fixation du disque de frein.

9. Frein à disque conforme à l'une des revendications 1 à 8,
**caractérisé en ce que**
l'encadrement (15) et/ou le disque de coupelle (17) est/sont réalisé(s) en un alliage de métal léger.

10. Frein à disque conforme à l'une des revendications 1 à 9,
**caractérisé en ce que**
l'encadrement (15) et/ou le disque de coupelle (17) est/sont formé(s) par coulée.

11. Frein à disque conforme à l'une des revendications 1 à 10,
**caractérisé en ce que**
les zones de transition entre l'encadrement (15) et le disque de coupelle (17) sont rigidifiées au moins partiellement par accumulation de matière.

12. Frein à disque conforme à l'une des revendications 1 à 11,
**caractérisé en ce que**
les nervures (19) de l'encadrement (15) présentent dans la zone des évidements (10) un profil de section qui est adapté pour permettre, par sa rotation, pour refouler de l'air, de la coupelle de disque de frein (1, 1a) en direction radiale vers l'extérieur en passant au travers des évidements (10), le long du disque de frein (2), ou dans le disque de frein (2) ou entre les disques de frein (2a, 2b).

13. Frein à disque conforme à l'une des revendications 1 à 12,
**caractérisé en ce que**
les nervures (19) de l'encadrement (15) présentent dans la zone des évidements (10) un profil de section comportant un angle aigüe (5) dont le sommet (20) est situé, dans le sens de rotation (6) de la coupelle de disque de frein (1, 1a), en raison des rayons (21) utilisés sur les coins de la section, en avant du profil de section, en particulier sur une tangente (9) au diamètre interne de la coupelle de disque de frein (flèche 22) et dont les branches (23, 24) s'étendent, à partir du sommet (20) à l'opposé du sens de rotation (6) de la coupelle de disque de frein (1, 1a).

14. Frein à disque conforme à l'une des revendications 1 à 13,
**caractérisé en ce que**
les nervures (19) de l'encadrement (15) présentent, dans la zone des évidements (10) un profil de section correspondant essentiellement à un parallélogramme dont le sommet (20) de son coin d'angle aigu inférieur (5) est situé dans le sens de rotation (6) de la coupelle de disque de frein (1, 1a) vers l'avant, en particulier essentiellement sur le diamètre interne (flèche 22) de la coupelle de disque de frein (1, 1a).

15. Frein à disque conforme à l'une des revendications 1 à 14,
**caractérisé en ce que**
les nervures (19) de l'encadrement (15) présentent, dans la zone des évidements (10) un profil de section comportant des coins arrondis en particulier réalisés sous la forme de rayons coulés (21).
